# EUROPEAN PATENT SPECIFICATION

(11) **EP 2 884 587 B1**
(45) Date of publication and mention of the grant of the patent: **12.02.2020**
(21) Application number: 12882817.5
(22) Date of filing: 09.08.2012
(51) Int. Cl.: H01R 4/20, H01R 4/02, H02G 1/14, H01R 4/18, H01R 13/523

(54) **METHOD FOR THE MECHANICAL AND ELECTRICAL JOINING OF ELECTRICAL CONDUCTORS**
VERFAHREN ZUM MECHANISCHEN UND ELEKTRISCHEN VERBINDEN VON ELEKTRISCHEN LEITERN
PROCÉDÉ DE RACCORDEMENT MÉCANIQUE ET ÉLECTRIQUE DE CONDUCTEURS ÉLECTRIQUES

(43) Date of publication of application: 17.06.2015
(73) Proprietor: Grupo General Cable Sistemas, S.A., 08036 Barcelona (ES)
(72) Inventor: ISUS FEU, Daniel, 08036 Barcelona (ES); GUIX DIAZ, Enric, 08036 Barcelona (ES); GOL GIMENO, Xavier, 08036 Barcelona (ES)
(74) Representative: Ponti & Partners, S.L.P
(86) International application number: PCT/ES2012/070620
(87) International publication number: WO 2014/023856

(56) References cited:
- EP-A2- 0 183 035
- WO-A2-2012/003982
- DE-A1- 19 902 405
- ES-A- 220 161
- FR-A- 1 071 295
- JP-U- S59 123 967
- US-A- 3 525 799

## Description

### Object of the Invention.

More specifically the invention refers to a procedure for joining two electrical conductors by welding and subsequent treatment of the joint and the conductors, with the placement of a joining terminal, so that the diameter of the joint, once it is placed in the joint area does not exceed the diameter of the conductors, thus ensuring both the purely mechanical as well as the electrical union.

### State of the Art.

Joining two electrical conductors with the aim of achieving a length of conductor appropriate to needs has been done technologically by using in some instances connectors with pressure screws, so that the ends of the conductors to be joined enter by into the ends of the connectors, and they are immobilised inside by these screws.

Anther way to join electrical conductors is by welding the ends of the conductors together, which results in an undesirable increase in the diameter of the conductor, which is a problem for subsequent coatings, and with the added difficulty if the conductor needs to slide through a protective cover or tube.

Another way to join is by means of a terminal or connector, formed by a surface which is folded by the action of a press, in this case it presents problems of conductivity and lack of evenness in the joint area with the aforementioned problems of alteration of the diameter in the joint area of the conductors, as it consists in shaping the reinforcement bush with a single impact made by a machine press.

An example of joint of electrical conductors are those disclosed in the European Patent n° 183.035 where the joint of the aluminium conductors of cables of electrical energy by means of a sleeve of a more rigid material than aluminium can be seen.

In the French patent no. 1.071.295 the improvements in the joint of electrical conductors by means of a ferrule initially open whose thickness varies in its ends are described and claimed, while the Japanese patent no. 123.967 shows a method for joining electrical conductors by means of an open sleeve whose separated ends are joint with the assistance of welding material.

Document EP0183035 discloses a method for mechanically and electrically joining electrical conductors made of copper, aluminium, steel or any other electrically conductive material, comprising: welding the ends of the electrical conductors to be joined, so defining a welding area; inserting the welded conductors between the edges of the reinforcement bush into the pre shaped reinforcement bush.

### Scope of the Invention.

The aim of the invention is to create a joint between two conductors with the same strength as the original cable, without modifying their mechanical or electrical properties.

The mechanical properties we wish to preserve refer to the requirement that the joining point of the conductors should have the same strength as the conductor without joints, and the electrical properties refer to the fact that the joining point should not negatively affect electrical conductivity throughout the length of the conductor, which would generate heat.

### Description of the Invention.

The installation of conductors for transporting electrical energy, mainly when these conductors travel on the seabed, needs large lengths of conductor that cannot normally be in a single piece, so different sections have to be joined by any known means. However, a conventional joint is not possible, as due to the large diameter of these conductors, they must bear longitudinal as well as torsional forces, as these conductors are laid on irregular surfaces, bearing their own weight as well, so breakage, apart from being probable, may be a great problem because of where the conductors are located and the difficulty and high cost to access them.

These conductors are laid after they are placed in hoses, the so-called umbilical cable, in which there are other conductors and tubes or not, so that the repair of any breakage under the deep water needs specialised resources and it is difficult to exactly locate the breakage point.

The procedure referred to in the invention begins with the pre-shaping of the surface of a flat plate to obtain, by deformation, a reinforcement bush with the help of mechanical means, such as folding between semi-circular dies in a vice or press located in front of each other, and with decreasing distances between them to cause a deformation from a flat configuration, that of the initial plate, until it becomes cylindrical, but without closing the edges of the reinforcement bush, leaving a certain alpha angle between them, to allow the later insertion of the welded conductors on the inside of said bush by the space delimited by those edges. The pre-shaping of the surface of the plate can be done by means of clamps, with a cooling circuit, which comes into action when welding the edges of the pre-formed bush longitudinally.

The material of the reinforcement bush will be a flat sheet of conductive metal material, including ferrous, non-ferrous and their alloys, with the same properties as the conductor regarding conductivity, as well as mechanical strength.

Then, once the conductors have been welded on one of their ends, the joint area is surrounded, by means of the previously deformed reinforcement bush, inserting the conductors and terminal and/or connector into it, a second set of clamps or sequence of clamps, each pair with a smaller diameter than the previous, until the edges are free of the reinforcement bush ready for welding, by adding solder to said bush. The last clamp is designed to have the same diameter as the previous one, but it provides the surface of the reinforcement bush with a grooved finish, these clamps, as explained above, have a cooling circuit that acts when the edges of the bush are welded.

On the surface of the reinforcement bush there are a series of grooves that facilitate the subsequent covering of the joint area. In all cases, the procedure described here obtains a diameter in the conductor joint area, which including the thickness of the wall of said reinforcement bush, is of the same dimensions as that of the conductors before they were joined.

Other details and characteristics shall be shown throughout the description below referring to drawings attached to this report which are shown for illustrative but not limiting purposes only in a drawing of the invention.

### Brief description of the drawings.

Below is a list of the different parts of the invention, which are indicated in the following drawings with their respective numbers; (10) reinforcement bush, (11) heating and forming workstation, (12) legs, (13) platform, (14) clamps, (15) rod, (16a, 16b) conductors to connect, (17) cavity, (18) edges, (19a, 19b) ends of the conductors, (20) workstation, (21) clamps, (22) welding line.
Figure 1 is a front elevation view of a reinforcement bush (10) before its modification in shape, from a flat surface to an open cylindrical surface, as can be seen in Figure 2.
Figure 2 is a front elevation view of the reinforcement bush (10) of Figure 1 curved, but with its edges open in an angle alpha.
Figure 3 is a side elevation view of a heating and forming workstation (11), for joining the conductors (16) .

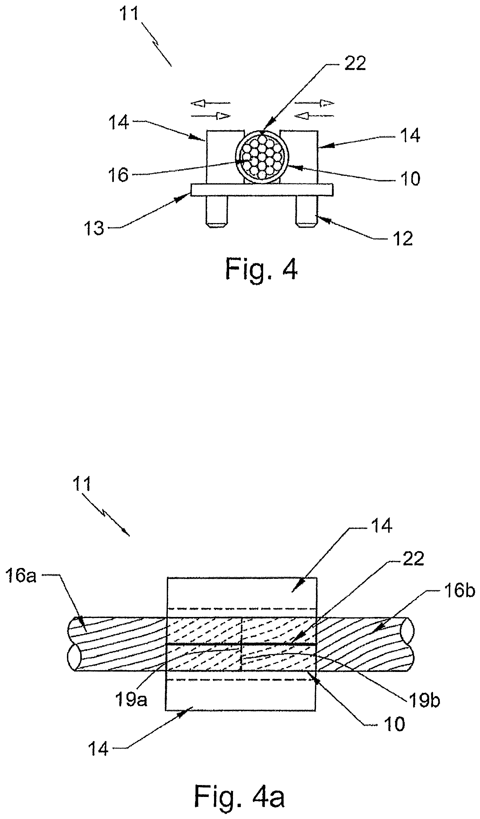

Figure 4 is a front elevation view and Figure 4a a top plan view of the heating and forming workstation (11), and with the conductors (16) between the clamps (14).
Figure 5a is a top plan view of a heating and forming workstation of "A" area before the operation of progressive shaping of the reinforcement bush (10) on the conductors, welded (19a, 19b) inside on the welding area by the action of clamps (14, 21).
Figure 5b is the same top view as Figure 5a but when the reinforcement bush (10) has acquired a diameter or section substantially the same as the diameter or section of the welded conductors (16a, 16b), namely when the progressive shaping operation has ended and df (final diameter) = dc (conductor diameter).

### Description of an embodiment of the invention.

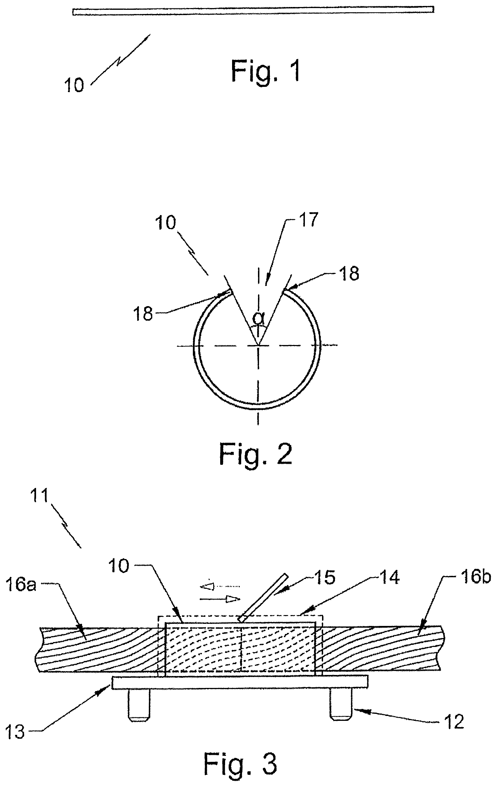

In one of the preferred embodiments of the invention, the procedure described here begins with pre-shaping of the reinforcement bush (10), which, as can be seen in Figure 1, may be a flat sheet (10) of copper, aluminium, steel or other similar metal with good electrical conductivity or a ferrous or non-ferrous material with its alloys, until it acquires an open cylindrical configuration which is shown in Figure 2, achieved by the action of semi-circular impressions in mechanical vice or a press or other similar system, not shown in the drawings, so that after the pre-shaping there is angle alpha between the edges (18) of the same, so that subsequently the previously welded conductors (16) can be inserted inside said reinforcement bush (10), in the welding area of the conductors (16).

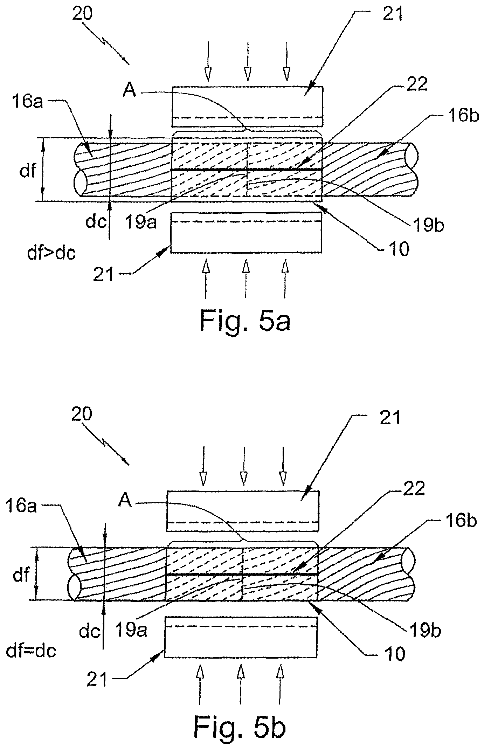

At the same time as the pre-shaping of the sheet (10) to turn it into a bush, there is an operation apart from the welding of the conductors (16) on one of their ends (19), for which their ends (19) are placed in a heating and forming workstation (11), which has clamps (14) opposite each other, the front face of both clamps having a circular open cavity (17) for placing the conductors (16), see Figure 2, so that when they are clamped (16) between the clamps (14), with a thermal lance or the like, and with solder, the ends (19) are welded and then the reinforcement bush (19) is fitted surrounding the welded area, and starting a circular shaping phase of (10), as can be seen in Figure 5.

The final shaping of the reinforcement bush (10) is carried out, as can be seen in Figure 5, by means of a second workstation (20) with pairs of opposed clamps (21), with their own cooling circuit (21), each with less distance between each pair of clamps, so that the deformation of the reinforcement bush (10) is progressive longitudinally, and the final diameter of the bush (10) with the conductors (16) in "A" area is the same as the original conductor, finally the bush is welded (10).

The final diameter "df" in the joint area of the two conductors (16), as can be seen in Figure 5, is equal to the diameter of the conductors "dc", as is shown in Figure 5, despite the thickness of the reinforcement bush (10) itself. Only when diameters df=dc, may a sheath surrounding and protecting the conductors (16) and the joint area where the reinforcement bush (10) is placed be fitted.

The aforementioned procedure may apply indistinctly to copper and/or aluminium cores, copper aluminium and steel terminals and/or connectors, as well ferrous and non-ferrous materials and their alloys, conductors with individual or multiple wires, LV, MV, HV, EHV cables.

## Claims

1. Method for mechanically and electrically joining electrical conductors made of copper, aluminium, steel or any other electrically conductive material, whereby the method comprises the following steps:
- welding the ends of the electrical conductors (16a, 16b) to be joined, so defining a welding area;
- pre-shaping of a reinforcement bush (10), by causing a deformation of a flat sheet of conductive metal until it becomes cylindrical but without closing the edges (18) of the reinforcement bush (10), leaving an angle α between the edges (18);
- inserting the welded conductors (16a, 16b) between the edges (18) into the pre-shaped reinforcement bush (10);
- fitting the pre-shaped reinforcement bush (10) to surround the welding area;
- progressive shaping of the pre-shaped reinforcement bush (10) with the welded conductors (16) placed inside until the final diameter of the reinforcement bush (10) is the same as of the conductor; and
- welding of the edges (18) of the reinforcement bush (10) with the welded conductors (16) placed inside.

2. Method for mechanically and electrically joining electrical conductors according to the claim 1, **characterised in that** the pre-shaping of the reinforcement bush (10) from a flat sheet is done by means of semi-circular dies in a vice or press.

3. Method for mechanically and electrically joining electrical conductors according to claim 1, **characterised in that** for welding the electrical conductors (16a, 16b) on one of their ends (19a, 19b), a heating and forming workstation (11) is used, which has clamps (14) opposite each other, the front face of both clamps (14) having a circular open cavity for placing the electrical conductors (16a, 16b), so that when they are clamped between the clamps (14), with a thermal lance or the like, and with solder, the conductor ends (19a, 19b) are welded.

4. Method for mechanically and electrically joining electrical conductors according to the claim 1, **characterised in that** the step of welding of the edges (18) of the reinforcement bush (10) is carried out in longitudinal direction in a whole of (A) area.

5. Method for mechanically and electrically joining electrical conductors according to the preceding claims, **characterised in that** the step of progressive shaping of the pre-shaped reinforcement bush (10) is carried out by means of a second workstation (20) with pairs of opposed clamps (21), with their own cooling circuit, each pairs of opposed clamps (21) having less distance between each pair of clamps, so that the deformation of the reinforcement bush (10) is progressive longitudinally.

6. Method for mechanically and electrically joining electrical conductors according to claim 5, **characterised in that** the last pair of opposed clamps (21) of the progressive shaping of the reinforcement bush (10) is designed to have the same diameter as the previous pair of opposed clamps.

7. Method for mechanically and electrically joining electrical conductors according to any one of the preceding claims, **characterised in that** the conductive metal of the flat sheet of the reinforcement bush (10) includes ferrous, non-ferrous and their alloys, with the same properties as the conductor regarding conductivity, as well as mechanical strength.

## Patentansprüche

1. Verfahren zum mechanischen und elektrischen Verbinden von elektrischen Leitern aus Kupfer, Aluminium, Stahl oder einem anderen elektrisch leitenden Material, wobei das Verfahren die folgenden Schritte umfasst:
- Verschweißen der Enden der zu verbindenden elektrischen Leiter (16a, 16b), wodurch ein Schweißbereich definiert wird;
- Vorformen einer Verstärkungsbuchse (10) durch Verformen eines flachen Blechs aus leitendem Metall, bis es zylindrisch wird, jedoch ohne die Kanten (18) der Verstärkungsbuchse (10) zu schließen, wobei ein Winkel α zwischen den Kanten verbleibt (18);
- Einführen der geschweißten Leiter (16a, 16b) zwischen die Kanten (18) in die vorgeformte Verstärkungsbuchse (10);
- Anbringen der vorgeformten Verstärkungsbuchse (10), um den Schweißbereich zu umgeben;
- progressives Formen der vorgeformten Verstärkungsbuchse (10) mit den darin angeordneten geschweißten Leitern (16), bis der Enddurchmesser der Verstärkungsbuchse (10) dem des Leiters entspricht; und
- Verschweißen der Ränder (18) der Verstärkungsbuchse (10) mit den darin angeordneten geschweißten Leitern (16).

2. Verfahren zum mechanischen und elektrischen Verbinden von elektrischen Leitern nach Anspruch 1, **dadurch gekennzeichnet, dass** das Vorformen der Verstärkungsbuchse (10) aus einem flachen Blech mittels halbkreisförmiger Gesenke in einem Schraubstock oder einer Presse erfolgt.

3. Verfahren zum mechanischen und elektrischen Verbinden von elektrischen Leitern nach Anspruch 1, **dadurch gekennzeichnet, dass** zum Verschweißen der elektrischen Leiter (16a, 16b) an einem ihrer Enden (19a, 19b) eine Heiz- und Formarbeitsstation (11) verwendet wird, die einander gegenüberliegende Klammern (14) aufweist, wobei die Stirnseite beider Klammern (14) einen kreisrunden offenen Hohlraum zum Anordnen der elektrischen Leiter (16a, 16b) aufweist, so dass bei Einklemmen zwischen die Klammern (14) mit einer Wärmelanze oder dergleichen und mit Lot, die Leiterenden (19a, 19b) verschweißt sind.

4. Verfahren zum mechanischen und elektrischen Verbinden von elektrischen Leitern nach Anspruch 1, **dadurch gekennzeichnet, dass** der Schritt des Verschweißens der Kanten (18) der Verstärkungsbuchse (10) in Längsrichtung in einem gesamten Bereich (A) durchgeführt wird .

5. Verfahren zum mechanischen und elektrischen Verbinden von elektrischen Leitern nach den vorhergehenden Ansprüchen, **dadurch gekennzeichnet, dass** der Schritt des progressiven Formens der vorgeformten Verstärkungsbuchse (10) mittels einer zweiten Arbeitsstation (20) mit Paaren gegenüberliegender Klemmen ausgeführt wird (21), einen eigenen Kühlkreislauf aufweisen, wobei jedes Paar gegenüberliegender Klammern (21) einen geringeren Abstand zwischen jedem Paar von Klammern aufweist, so dass die Verformung der Verstärkungsbuchse (10) in Längsrichtung progressiv ist.

6. Verfahren zum mechanischen und elektrischen Verbinden von elektrischen Leitern nach Anspruch 5, **dadurch gekennzeichnet, dass** das letzte Paar gegenüberliegender Klammern (21) der progressiven Formgebung der Verstärkungsbuchse (10) so ausgelegt wird, dass es den gleichen Durchmesser wie das vorherige Paar gegenüberliegender Klammern aufweist.

7. Verfahren zum mechanischen und elektrischen Verbinden von elektrischen Leitern nach einem der vorhergehenden Ansprüche, **dadurch gekennzeichnet, dass** das leitfähige Metall des Flachblechs der Verstärkungsbuchse (10) Eisen-, Nichteisen- und deren Legierungen enthält und zwar mit den gleichen Eigenschaften wie der Leiter in Bezug auf Leitfähigkeit sowie mechanische Festigkeit.

## Revendications

1. Procédé de raccordement mécanique et électrique de conducteurs électriques constitués de cuivre, d'aluminium, d'acier ou tout autre matériau électriquement conducteur, moyennant quoi le procédé comprend les étapes suivantes :
- le soudage des extrémités des conducteurs électriques (16a, 16b) à raccorder, en définissant ainsi une zone de soudage ;
- le pré-façonnage d'une douille de renforcement (10), en provoquant une déformation d'une feuille plate de métal conducteur jusqu'à ce qu'elle devienne cylindrique mais sans refermer les bords (18) de la douille de renforcement (10), laissant un angle α entre les bords (18) ;
- l'insertion des conducteurs soudés (16a, 16b) entre les bords (18) dans la douille de renforcement (10) pré-façonnée ;
- l'ajustement de la douille de renforcement (10) pré-façonnée pour encercler la zone de soudage ;
- le façonnage progressif de la douille de renforcement (10) pré-façonnée avec les conducteurs soudés (16) placés à l'intérieur jusqu'à ce que le diamètre final de la douille de renforcement (10) soit le même que celui du conducteur ; et
- le soudage des bords (18) de la douille de renforcement (10) avec les conducteurs soudés (16) placés à l'intérieur.

2. Procédé de raccordement mécanique et électrique de conducteurs électriques selon la revendication 1, **caractérisé en ce que** le pré-façonnage de la douille de renforcement (10) à partir d'une feuille plate est effectué au moyen d'emporte-pièces semi-circulaires dans un étau ou une presse.

3. Procédé de raccordement mécanique et électrique de conducteurs électriques selon la revendication 1, **caractérisé en ce que** pour le soudage des conducteurs électriques (16a, 16b) sur l'une de leurs extrémités (19a, 19b), un poste de travail de chauffage et de mise en forme (11) est utilisé, qui possède des mâchoires (14) opposées l'une à l'autre, la face avant des deux mâchoires (14) ayant une cavité ouverte circulaire pour placer les conducteurs électriques (16a, 16b), de sorte que lorsqu'ils sont serrés entre les mâchoires (14), avec une lance thermique ou analogues, et avec de la soudure, les extrémités des conducteurs (19a, 19b) sont soudées.

4. Procédé de raccordement mécanique et électrique de conducteurs électriques selon la revendication 1, **caractérisé en ce que** l'étape de soudage des bords (18) de la douille de renforcement (10) est réalisée dans la direction longitudinale dans la totalité d'une zone (A).

5. Procédé de raccordement mécanique et électrique de conducteurs électriques selon les revendications précédentes, **caractérisé en ce que** l'étape de façonnage progressif de la douille de renforcement (10) pré-façonnée est réalisée au moyen d'un second poste de travail (20) ayant des paires de mâchoires opposées (21), ayant leur propre circuit de refroidissement, chacune des paires de mâchoires opposées (21) ayant une distance inférieure entre chaque paire de mâchoires, de sorte que la déformation de la douille de renforcement (10) est progressive de manière longitudinale.

6. Procédé de raccordement mécanique et électrique de conducteurs électriques selon la revendication 5, **caractérisé en ce que** la dernière paire de mâchoires opposées (21) du façonnage progressif de la douille de renforcement (10) est conçue pour avoir le même diamètre que la paire précédente de mâchoires opposées.

7. Procédé de raccordement mécanique et électrique de conducteurs électriques selon l'une quelconque des revendications précédentes, **caractérisé en ce que** le métal conducteur de la feuille plate de la douille de renforcement (10) inclut des éléments ferreux, non ferreux et leurs alliages, ayant les mêmes propriétés que le conducteur en ce qui concerne la conductivité ainsi que la résistance mécanique.
